# EUROPÄISCHE PATENTSCHRIFT

(11) **EP 0 557 267 B1**
(45) Veröffentlichungstag und Bekanntmachung des Hinweises auf die Patenterteilung: **01.10.1997**
(21) Anmeldenummer: 93890019.8
(22) Anmeldetag: 17.02.1993
(51) Int. Cl.: B64D 11/00, B65D 8/00, B29D 24/00, B29D 31/00, B29C 70/00

(54) **Kunststoffbehälter**
Plastic container
Récipient en polymère

(30) Priorität: 20.02.1992 AT 312/92
(43) Veröffentlichungstag der Anmeldung: 25.08.1993
(73) Patentinhaber: FISCHER ADVANCED COMPOSITE COMPONENTS GESELLSCHAFT m.b.H., A-4910 Ried im Innkreis (AT)
(72) Erfinder: Stephan, Walter A., Dipl.-Ing., A-4973 St. Marein (AT); NEUBOECK, Manfred, A-4910 Ried im Innkreis (AT)
(74) Vertreter: Köhler-Pavlik, Johann, Dipl.-Ing.

(56) Entgegenhaltungen:
- EP-A- 0 271 118
- EP-A- 0 293 320
- DE-A- 2 646 247
- DE-A- 3 537 402
- FR-A- 2 563 153
- FR-A- 2 588 575
- US-A- 4 019 674

## Beschreibung

Die Erfindung betrifft eine Überkopf-Gepäckablage gemäß dem Oberbegriff des Patentanspruches 1 sowie ein Verfahren zu dessen Herstellung gemäß dem Oberbegriff des Patentanspruches 6 oder 7.

In der US-PS 4 019 674 ist unter anderem für Behälter eine Konstruktionen vorbebeschrieben, bei welcher ein die Ummulde sowie eine Verschlußklappe bildender Bauteil mit ebenen Endwänden verbunden ist. Die Bauteile werden separat voneinander angefertigt und anschließend miteinander verbunden. Als Material für die Endwände sind als Beispiele Polyäthylen und Polystyrol, h. d. thermoplastische Materialien, angegeben. Für den die Ummulde bildenden Bauteil sind unter anderem Faserplatten, d. h. faserverstärkte Bauteile, vorgeschlagen, wobei eine Kombination, die explizit angegeben ist, Polystyrol-Endplatten und einen Faserplattenbauteil betrifft.

Im besagten Dokument ist jedoch keinerlei Hinweis enthalten, wie der Behälter gefertigt sein könnte, um damit einen besonders leichten, aber festen Aufbau zu erhalten, um die in der Luftfahrttechnik geforderten Festigkeitswerte bei gleichzeitig geringem Gewicht zu erzielen.

Die DE-OS 26 46 247 beschreibt einen Koffer und ein Verfahren zu dessen Herstellung. Dabei ist ein die Ummulde bildener Bauteil, der unter anderem auch aus Kunststoff bestehen kann, mit zwei Endwänden verbunden, die beispielsweise aus Polystyrol, d. h. wiederum einem Thermoplastmaterial, bestehen können. Die Verbindung erfolgt durch Reibung und damit einen Klemmsitz innerhalb des Flanschrandes, wobei allenfalls Rippen, Widerhaken od. dgl. vorgesehen sein können, um den Halt noch zu verbessern. Auch ist, wie in der US-PS 4 019 674, die Ausbildung von U-förmigen Flanschen an den Endwänden zur Einführung der seitlichen Kanten des die Ummulde bildenden Bauteiles vorbeschrieben, und kein Hinweis gegeben, wie die beschriebene Konstruktion zur Anwendung in der Luftfahrttechnik verbessert werden könnte.

Sogenannte Überkopf-Gepäckablagefächer werden z.B. in modernen Verkehrsmaschinen für Aufbewahrung des Handgepäckes von Passagieren während des Fluges verwendet. Aufgrund der in der Start- und Landephase, sowie während des Fluges und in Notfällen auftretenden Manöverlasten am Flugzeugrumpf und des Gewichtes der in den Stauräumen aufbewahrten Gegenstände, unterliegen diese Überkopf-Gepäckablagefächer hohen mechanischen Belastungen.

Überkopf-Gepäckablagefächer werden deshalb heute hauptsächlich aus modernen Faserverbundwerkstoffen, hauptsächlich Glasfaserverbundwerkstoffen, neuerdings aber auch Carbonfaserverbundwerkstoffen hergestellt. Grundsätzlich werden zwei verschiedene Herstellungsverfahren eingesetzt:

Die Bauteile werden entweder aus ebenen Sandwichbauteilen hergestellt, die in einer Fügetechnik wie sie aus dem Möbelbau bekannt ist, zu einem Gepäckablagefach zusammengesetzt werden (Zuschnitt der Platten, Falttechnik der Platten). Derartige Bauteile sind bei gleichen Flächengewichten der Sandwichplatten durch die Verbindungselemente durchwegs schwerer. Das Verfahren ist automatisierbar und die Elemente der Gepäckablagefächer sind leicht standardisierbar. Hohe Verfahrenssicherheit durch sehr genau definierte, simple Fertigungsschritte ist gegeben.

Nach einer zweiten gebräuchlichen Methode werden die Bauteile über einem Werkzeug aus Kunststoffhalbzeugen, wie z.B. Kunststoffprepregs und Leichtbaukernen, aufgebaut. Die Bauteile werden in einen Vakuumsack eingepackt und bei höheren Temperaturen und teilweise auch unter Druck im Autoklaven bzw. nur im Ofen ausgehärtet. Die Außenkontur des Werkzeuges entspricht der späteren Innenkontur des Gepäckablagefaches. Aufgrund des Fehlens von Verbindungselementen, mit der Notwendigkeit, jeden zu verbindenden Teil auf einfache Sicherheit auszulegen, sind Bauteile, die nach diesem Verfahren aufgebaut sind, wesentlich leichter - ein entscheidender Vorteil in der Luftfahrtindustrie.

Die Verfahrenssicherheit ist jedoch gering und auftretende Mängel im Produktionsverfahren führen zu aufwendigen Nacharbeitskosten und zu einer Gewichtserhöhung der Bauteile.

Die oben beschriebenen Methoden erfordern komplizierte Herstellungsvorgänge, um die gewünschte Form der Ablage einschließlich der End- und allfälliger Zwischenwände zu erzielen. Auch die Formwerkzeuge hierfür sind aufwendig und daher teuer.

Zusätzlich zum arbeitsaufwendigeren Zusammenbau der Gepäckablage und der Notwendigkeit zusätzlicher verbindender Bauteile besteht die Gefahr, daß an den Verbindungsstellen durch die im Flugbetrieb immer auftretenden feinen Vibrationen, Beschädigungen der besagten Behälter auftreten können. Dies könnte speziell bei Notlandungen, wo der Gepäckraum bis zu neunfacher Erdbeschleunigung aushalten muß, zu Gefährdungen der Passagiere führen.

Durch die EP-A-0 293 320 ist ein Rotorblatt bekanntgeworden, bei welchem eine Verbindung aus zwei Verbundbauteilen mit hoher Stabilität angestrebt wird, um eine möglichst hohe Torsionssteifigkeit und Biegesteifigkeit des Rotorblattes zu erreichen und damit sowohl Belastungen in Längsrichtung als auch Biegebeanspruchungen standzuhalten. Die zu verbindenden Bauteile bestehen aus zwei Schichten in Sandwichbauweise, zwischen denen Füllungen wie z.B. Wabenstrukturen oder schaumförmige Materialien angeordnet sind. Im Inneren des Holms des Rotorblattes wird keine Last transportiert.

Die Aufgabe der Erfindung war es daher, eine Kunststoffgepäckablage der eingangs angegebenen Art derart auszubilden, daß er bei einfacher Herstellung und geringem Eigengewicht durch die darin verstauten Gepäckstücke und Belastungen von außen, wie z.B. bei Böigkeit während des Fluges oder beim Start oder der Landung standhalten muß und auch den während des normalen Fluges auftretenden hohen mechanischen Belastungen sicher widersteht und alle der oben angeführten Nachteile vermeidet.

Die gestellten Aufgaben sind durch die Maßnahmen nach dem kennzeichnenden Teil des Patentanspruches 1 gelöst. Bei dieser Konstruktionsweise sorgt der zumindest teilweise die Seitenwände oder die Ummulde bildende Bauteil aus Verbundwerkstoff in Verbindung mit den Bereichen der Wabenbaustoffe für die nötige Festigkeit, während er und insbesondere die ebenen End- und Zwischenwände aus Spritzguß in einfacher Weise durch bekannte Techniken herstellbar und leicht aber sicher miteinander verbindbar sind. Der Kompositteil ist durch die Beabstandung der Wabenbaustoffen sehr einfach in die gewünschte gebogene oder geknickte Form zu bringen, welche ebenfalls in bekannter Weise zur mechanischen Stabilität beiträgt. Der erfindungsgemäße Aufbau ergibt eine besonders feste und widerstandsfähige, dabei jedoch leichte Kunststoffgepäckablage.

Durch die Maßnahme nach Anspruch 2 werden die oben genannten Vorteile noch verstärkt.

Eine einfache und sichere Verbindung der Verschlußklappe des Behälters mit dem Korpus des Kunststoffbehälters ergibt sich gemäß dem zusätzlichen Merkmal nach Anspruch 3.

Eine baulich besonders einfache Weise ergibt sich durch die Maßnahme nach Anspruch 4.

Die oben angegebenen Materialien zur Herstellung des Kunststoffbehälters gestatten auch in vorteilhafter Weise die einfache und sichere Anbringung von Anschlußteilen, beispielsweise Beschlägen, Aufhängteilen, Auflagern, Befestigungsteilen für Räder oder Rollen, durch die Maßnahme nach Anspruch 5.

Eine weitere Aufgabe der Erfindung war es, Fertigungsmethoden anzugeben, die einerseits einfach und wirtschaftlich durchführbar sind und die Nachteile herkömmlich hergestellter Kunststoffbehälter vermeidet.

Zur Lösung dieser Aufgabe dient als erstes erfindungsgemäßes Verfahren die Maßnahme nach Anspruch 6.

Diese an sich bekannten und bewährten Herstellungsmethoden gewährleisten die einfache und sichere Herstellung des Kunststoffbehälters mit den geforderten Festigkeitseigenschaften aufgrund des erfindungsgemäßen Aufbaues. Durch die separate Fertigung der einzelnen Bauteile kann für jeden Bauteil die geeignetste, sicherste und kostengünstigste Herstellungsweise gewählt werden, während die Materialwahl und die Zusammenstellung die geforderten mechanischen Festigkeitswerte bei geringem Gewicht gewährleistet.

Ein zweites Verfahren sieht erfindungsgemäß die Maßnahme nach Anspruch 7 vor.

Durch die Verschweißung bzw. Verklebung können zusätzliche, verbindende Bauteile, die Anlaß zur Beschädigungen während des Betriebes geben könnten und das Gewicht erhöhen, vermieden werden, sodaß eine leichte und dennoch sichere Konstruktion gegeben ist. Die einzelnen Bauteile weisen relativ unkomplizierte Formen auf, die in einfachen und daher billigen Anlagen vorgefertigt werden können. So ist beispielsweise die Herstellung von Prepregs eine ohne großen Aufwand und sehr wirtschaftlich lösbare Aufgabe. Schließlich ist auch die Negativform zum Anlegen aller vorgefertigten Teile einfach auszuführen und muß nicht in eine komplizierte Vorrichtung zum Formen des Kunststoffteiles aus einem Stück integriert sein. Auch diese trägt zur Wirtschaftlichkeit und Einfachheit des erfindungsgemäßen Verfahrens wesentlich bei.

Durch die Maßnahme nach Anspruch 8 ergibt sich eine noch festere Ausführung der Gepäckablage.

Bei der Herstellungsvariante der erfindungsgemäßen Kunststoffgepäckablage in der Variante mit einem auf eine Negativform aufgelegten Prepreg, an welche Form auch alle zusätzlichen Teile ebenfalls angelegt werden, kann eine besonders sichere und stabile Verbindung an den Übergangsbereichen zwischen dem gebogenen oder geknickten Bauteil und den Endwänden durch die Maßnahme nach Anspruch 9 erzielt werden.

Bei beiden Verfahrensvarianten ist vorteilhafterweise die Maßnahme nach Anspruch 10 möglich. Wie leicht zu erkennen ist, stellt dies eine weitere Vereinfachung des Herstellungsverfahrens und eine Erhöhung der Verfahrenssicherheit dar, da auch für die genannten Anschlußteile zusätzliche Verbindungselemente vermieden werden können, was eine weitere Gewichtseinsparung erlaubt, und auch separate Fertigungs- und Verbindungsschritte für die genannten Teile nicht mehr nötig sind. Für die Sicherheit der Verbindung der Anschlußteile mit der Kunststoffgepäckablage gilt das bereits oben für die Kunststoffgepäckablage selbst Gesagte.

In der nachfolgenden Beschreibung sollen unter Bezugnahme auf die beigefügten Zeichnungen zwei erfindungsgemäße Kunststoffgepäckablagen und zwei vorteilhafte Verfahrensvarianten näher erläutert werden.

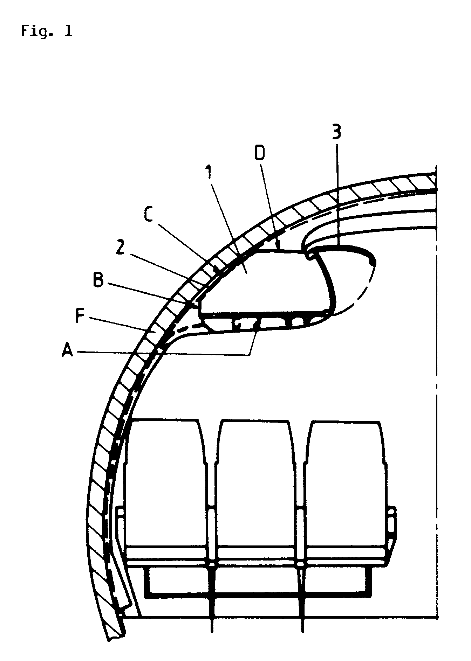

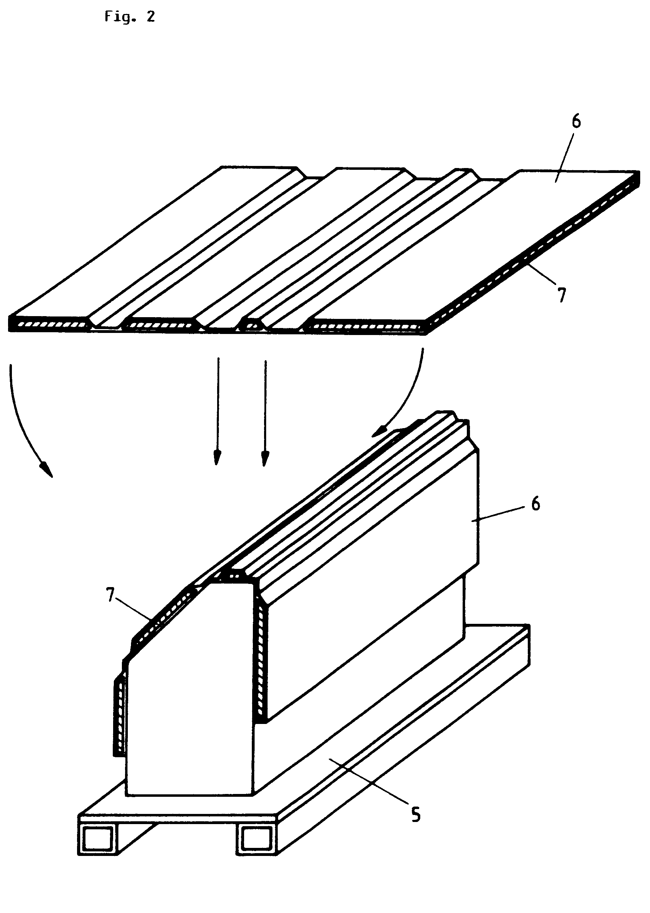

Dabei zeigen die Fig. 1 in schematischer Darstellung eine Überkopf-Gepäckablage im Flugzeugrumpf,
- Fig. 2: in schematischer Darstellung ein Prepreg für den gebogenen oder geknickten Bauteil und dessen Anlegen an eine Negativform,
- Fig. 3a: in schematischer Darstellung den Zustand vor dem Anlegen von vorgefertigten Bauteilen an einer Negativform,
- Fig. 3b: das Abnehmen der zusammengesetzen ausgehärteten Kunststoffgepäckablage und
- Fig. 4a und 4b: Querschnittsdarstellungen für vorteilhafte Varianten zur Verbindung der Bauteile der erfindungsgemäßen Gepäckablage miteinander.

In Fig. 1 ist als Beispiel eine erfindungsgemäß aufgebaute und hergestellte Überkopf-Gepäckablage für Flugzeuge dargestellt. Die an der Innenseite der Wandung F des Flugzeugrumpfes befestigte Gepäckablage besteht aus ebenen Endwänden 1 und einem einfach oder mehrfach gebogenen bzw. geknickten Bauteil 2, der mit seiner Seite A den Boden, mit seinen Seiten B und C die Rückwand und mit seiner Seite D den Oberteil der Gepäckablage bildet. Im Bauteil 2 können vorteilhafterweise durch Klappen verschließbare Öffnungen vorgesehen sein, durch welche der zwischen der Innenwandung F des Flugzeugrumpfes und der Rückwand der Gepäckablage befindliche Bereich und darin verlaufende elektrische oder hydraulische Leitungen zu Wartungs- oder Reparaturzwecken zugänglich sind. An ihrer dem Passagierraum zugewandten Seite ist die Gepäckablage durch eine allenfalls gewölbte bzw. geknickte Verschlußklappe 3 abschließbar. Allenfalls kann zwischen den jeweiligen Endwänden 1 eines Gepäckabteiles noch zumindest eine Zwischenwand (nicht sichtbar) vorgesehen sein.

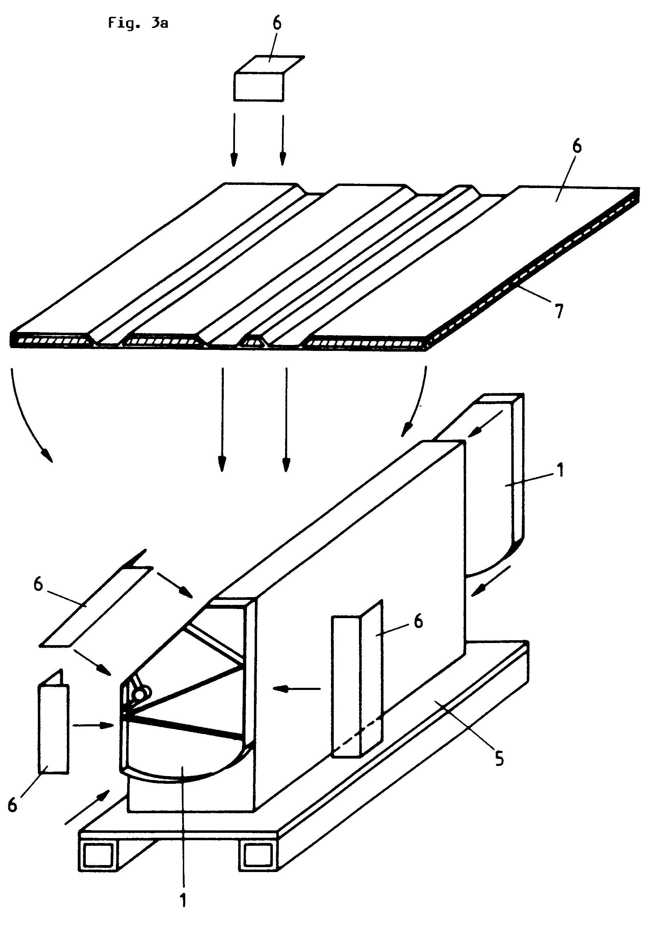

Erfindungsgemäß ist nun der gebogene bzw. geknickte Bauteil 2 ein Kompositteil, vorzugsweise aus Glasfaser- oder Carbonfaserverbundstoff, und ist in Sandwichbauweise gefertigt. In der bevorzugten Ausführungsform ist im Sinne der einfachen Herstellung und der Festigkeit der Kunststoffgepäckablage der besagte Kompositbauteil 2 aus Prepregs 6 gefertigt und enthält Bereiche aus Wabenbaustoffen 7 (siehe Fig. 2). Die die strukturelle Festigkeit der Kunststoffgepäckablage. gewährleistenden Wabenbaustoffe 7, beispielsweise die üblichen Honeycomb-Baustoffe, sind etwas voneinander beabstandet, um die gewünschte Formgebung des Kompositbauteiles 2 während des Fertigungsvorganges zu gestatten.

Für die Verbindung von Anschlußbauteilen, beispielsweise Beschlägen, Aufhängteilen, Auflagen od. dgl. mit dem Grundkörper der Kunststoffgepäckablage besteht die Möglichkeit der Verklebung, Verschraubung, Vernietung oder die Möglichkeit diese Anschlußbauteile durch Mit- bzw. Anspritzen mit dem Kompositbauteil 2 oder den Endwänden 1 zu verbinden. Während die Varianten der Verschraubung und Vernietung Verbindungen ergeben, die auch auf Scherung besser beanspruchbar sind, ergibt sich bei einer Verklebung oder einem Mit- bzw. Anspritzen der Vorteil, daß zusätzliche Bauteile und zusätzliches Gewicht eingespart werden können.

Der letztgenannte Vorteil ergibt sich auch dann, wenn die Verschlußklappe 3 und der die Ummulde der Gepäckablage bildende Bauteil 2 aus einem Stück gefertigt sind.

Zwischen dem Bauteil 2 und der Klappe 3 ist eine Verdünnung des Materials bzw. ein Zwischenraum zwischen Bereichen mit Wabenbaustoff 7 vorgesehen, um die Beweglichkeit der Verschlußklappe 3 gegenüber dem Bauteil 2 zu gewährleisten.

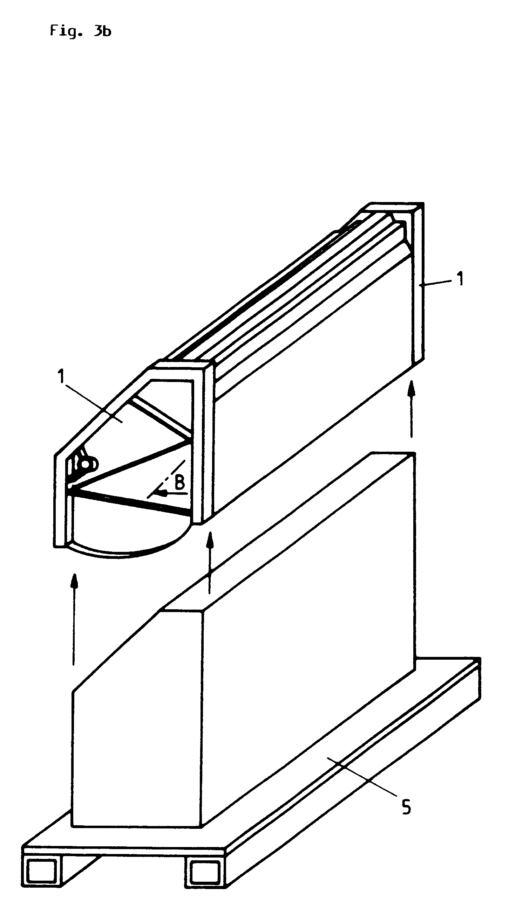

Zwei bevorzugte Herstellungsverfahren für die bislang beschriebenen Kunststoffgepäckablagen sollen nachfolgend in Verbindung mit den Fig. 2 und 3 beschrieben werden.

Gemäß dem ersten Verfahren ist vorgesehen, daß die ebenen Endwände 1 und evtl. die allfälligen Zwischenwände gespritzt werden, wobei vorzugsweise Thermoplastmaterial verwendet wird, und daß der gebogene oder geknickte Kompositbauteil 2 sowie allenfalls auch die Verschlußklappe 3 separat vorgefertigt werden. Anschließend werden alle Bauteile durch Verkleben, Verschrauben, Vernieten oder Verschweißen miteinander verbunden. In Fig. 2 ist in schematischer Darstellung die bevorzugte Ausführung und Herstellungsmethode für den gebogenen oder geknickten Bauteil 2 dargestellt. Auch die Verschlußklappe 3 könnte, wenn sie geknickt oder gebogen ausgeführt sein soll, entsprechend diesem Herstellungsverfahren angefertigt werden. Wie gezeigt, wird ein Prepreg 6 vorbereitet, wobei Bereiche mit Wabenbaustoffen 7 vorgesehen sind, die die nötige strukturelle Festigkeit des Endbauteiles ergeben. Dieser Prepreg 6 wird auf eine Negativform 5 aufgebracht, deren Ausführungsform den Innenabmessungen des Kunststoffbehälters entspricht, wobei die zwischen den Wabenbaustoffen 7 vorgesehenen Abstände bzw. Bereiche mit Verdünnung des Materials dazu dienen, die Formung des Prepregs 6 um die Negativform 5 herum zu erleichtern. In herkömmlicher Weise wird der Prepreg 6 an der Negativform 5 fixiert, beispielsweise unter Verwendung eines Vakuumsackes und anschließend in einem Autoklaven durch Wärmeanwendung allenfalls, auch unter Druck, ausgehärtet.

Anstelle der separaten Anfertigung der Kompositbauteile 2 inklusive deren Aushärtung ist gemäß einem zweiten erfindungsgemäßen Herstellungsverfahren vorgesehen, daß alle den Kunststoffbehälter bildenden Bauteile auf eine Negativform 5 in der vorbestimmten Anordnung aufgelegt, in herkömmlicher Weise fixiert und in einem Autoklaven durch Wärmeanwendung, allenfalls auch unter Druck, ausgehärtet werden. Diese Variante ist in Fig. 3a dargestellt, wo ersichtlich ist, daß die ebenen aus Thermoplastmaterial gespritzten Endwände 1 sowie der Prepreg 6 für den Kompositbauteil 2, wieder unter Verwendung von Wabenbaustoffen 7, an die Negativform 5 angelegt werden. Die Fixierung der Bauteile erfolgt auf herkömmliche Weise, beispielsweise durch einen Vakuumsack. Nach der Aushärtung im Autoklaven wird der fertige Kunststoffbehälter, bestehend aus den ebenen Endwänden 1, aus allfälligen Zwischenwänden (nicht dargestellt) und dem gebogenen oder geknickten Kompositbauteil 2 von der Form in einem Stück abgenommen und der Nachbearbeitung, wie beispielsweise der entsprechenden Farbgebung, zugeführt.

Unter Einsparung von zusätzlichen Bauteilen erfolgt die Verbindung der Bauteile miteinander lediglich durch die bei der Aushärtung erfolgende Verklebung bzw. Verschweißung der Bauteile.

Vorteilhafterweise sind an den Bauteilen 1, die vorzugsweise aus Thermoplastmaterial gespritzt werden, bereits Anschlußteile, wie beispielsweise Beschläge, Aufhängteile für die spätere Anbringung am Flugzeugrumpf, Auflager oder Dekorkanten, im Zuge der Herstellung im selben Arbeitsgang mitgespritzt worden. Am gebogenen Bauteil 2 und/oder an der Verschlußklappe 3 können auch bereits Bauteile eingebaut sein, die der Verbindung dieser Bauteile 2, 3 miteinander dienen. So kann beispielsweise ein Teilstück eines Scharnieres am Bauteil 2 oder der Verschlußklappe 3 vor dem Zusammenbau angebracht und mit einem Verbindungsstück zum benachbarten Bauteil versehen worden sein. Allenfalls kann zwischen einigen Anschlußbauteilen, beispielsweise Scharnierteilen der Verschlußklappe 3 und dem gebogenen Bauteil 2, ein Klebefilm, ein flüssiger Klebstoff od. dgl. aufgetragen sein, um während des nachfolgenden Aushärtevorgangs diese Bauteile miteinander zu verbinden.

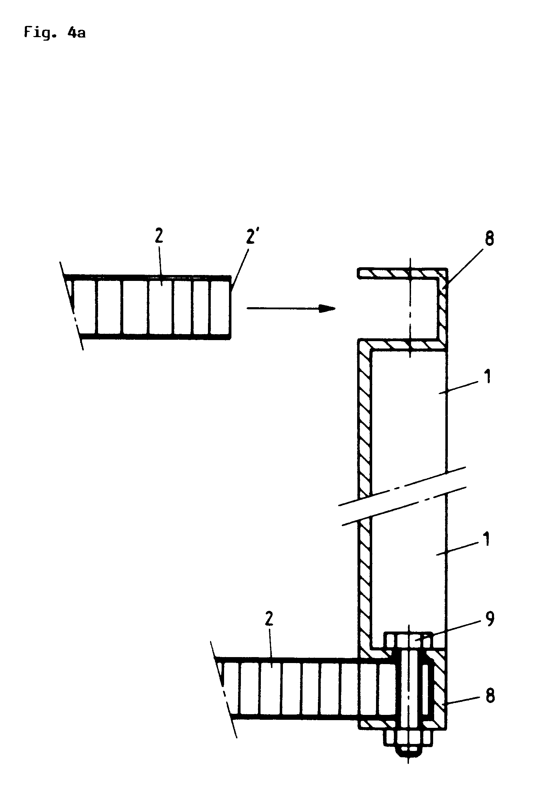

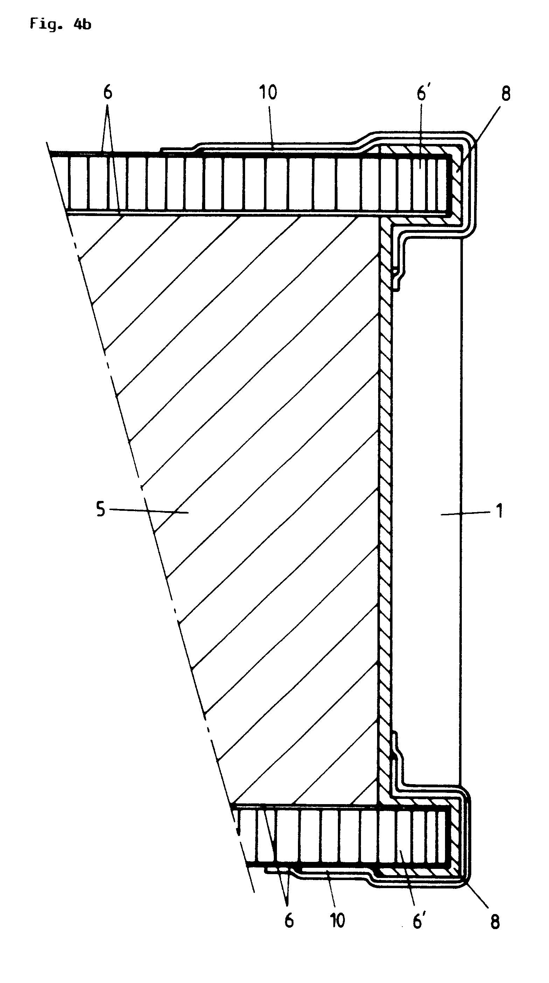

Schließlich soll auch auf die in den Fig. 4a und 4b gezeigten vorteilhaften Varianten für die Verbindung des gebogenen bzw. geknickten Bauteiles 2 mit den ebenen Endwänden 1 eingegangen werden. In der oberen Hälfte der Fig. 4a ist dargestellt, wie eine seitliche Kante 2' des gebogenen oder geknickten Kompositbauteiles 2 in einen U-förmigen Flansch 8 am Außenrand der ebenen Endwand 1 eingeführt wird. Dies führt bei entsprechender Auslegung der Bauteile zu einer Art Steckverbindung, welche die beiden zusammengeführten Bauteile 1, 2 bereits vor deren endgültiger Verbindung miteinander in ausreichender Weise fixiert, um deren weitere Handhabung und Verarbeitung wesentlich zu erleichtern. So müssen beispielsweise beim Anlegen an einer Negativform 5 im besten Fall keine zusätzlichen Fixierungselemente verwendet werden.

In der unteren Hälfte der Fig. 4a ist eine Variante für die endgültige Verbindung der Endwand 1 mit dem Kompositbauteil 2 dargestellt, bei der eine Schraube, Niete od. dgl. 9 für die endgültige Verbindung sorgt. Eine derartige Verbindung ist besonders belastbar, da die Schraube oder Niete 9 nur auf Scherung beansprucht wird. Wie ebenfalls aus Fig. 4a zu ersehen ist, durchdringt die besagte Schraube oder Niete 9 den Flansch 8 der Endwand 1 und die Kante 2' des Kompositbauteiles 2 parallel zur Endwand 1, aber außerhalb deren Ebene und insbesondere außerhalb des Innenraumes der fertigen Kunststoffgepäckablage. Zusätzlich zum Vorteil, daß eine derartige Schraubverbindung dreier parallel übereinanderliegender Lagen einfach herzustellen ist, kann der Innenraum der Kunststoffgepäckablage frei von hineinragenden Teilen des verwendeten Verbindungselementes, wie beispielsweise der Schraube 9, gehalten werden.

Selbstverständlich kann unter Vermeidung der Schraube, Niete od. dgl. 9 auch eine Verbindung lediglich durch Verklebung oder Verschweißen auch bei der in Fig. 4a dargestellten Variante vorgesehen sein. Ein besonders bevorzugtes Ausführungsbeispiel einer derartigen Verbindung ist in Fig. 4b dargestellt. Auch hier ist die ebene Endwand 1 mit U-förmigen Flanschen 8 an ihrem Umfangsrand versehen, wobei diese Flansche 8 nur die seitlichen Kanten 6' des Prepreg 6 für den Bauteil 2 aufnehmen. Dieser Prepreg 6 würde vor Aufsetzen der Endwand 1 auf die Negativform 5 aufgelegt, wobei die jeweiligen Abmessungen derart gewählt sind, daß die Seitenkanten 6' etwas über die Negativform 5 hinausragen, sodaß die innere Oberfläche der Endwände 1 nach Aufsetzen und Einführen der Seitenkanten 6' in die Flansche 8 an der äußeren Seitenwand der Negativform 5 vollständig aufliegt. Zur Verbesserung der Stabilität und der Verbindung zwischen der Endwand 1 und dem Prepreg 6 wird ein weiterer Prepreg 10 verwendet, der vorzugsweise vor dem Aushärten der Bauteile über zumindest den den Seitenkanten 6' des Prepregs 6 benachbarten Bereich und die Außenseite der Endwände 1 bzw. allenfalls über die Außenseite von deren Flanschen 8 gelegt und zusammen mit den übrigen Bauteilen ausgehärtet wird. Dabei kann sich der Prepreg 10 nur auf den Bereich beschränken, der unmittelbar den Seitenkanten 6' benachbart liegt, wobei an an der gegenüberliegenden Seitenkante ebenfalls ein entsprechender Prepreg vorgesehen ist, oder es kann auch ein sich über die gesamte Breite des Prepregs 6 erstreckender Prepreg 10 vorgesehen sein. Auch alle beliebigen Abstufungen dazwischen sind möglich.

Durch die gemeinsame Aushärtung wird der Flansch 8 der Endwand 1 fest zwischen die Seitenkanten 6' des Prepregs 6 und den Prepreg 10 eingebunden und derart eine sichere Verbindung zwischen den aus dem Prepreg 6 erhaltenen Bauteil 2 und den Endwänden 1 hergestellt.

Schließlich muß noch angemerkt werden, daß natürlich auch andere Formen für den Flansch 8 denkbar sind, insbesondere kann bei den Verfahren unter Verwendung einer Negativform 5, bei welchen der Prepreg 6 bzw. ein vorgefertigter Kompositbauteil 2 unterstützt wird, der Flansch lediglich aus einem umgekanteten und auf den Bauteil 2 oder den Prepreg 6 hinweisenden Teil gebildet sein, der diese an deren Außenseite umgibt. Für die gegenseitige Verbindung miteinander gilt das in den vorigen Absätzen Gesagte.

## Patentansprüche

1. Überkopf-Gepäckablage insbesondere für Flugzeuge, bestehend aus ebenen End- (1), allenfalls auch Zwischenwänden aus Spritzgußteilen, einem gebogenen oder geknickten, zumindest teilweise die Seitenwände oder Ummulde bildenden Bauteil (2) und zumindest einer Verschlußklappe (3), dadurch gekennzeichnet, daß der gebogene oder geknickte Bauteil (2) ein in Sandwichbauweise gefertigter Kompositteil mit voneinander beabstandeten Bereichen aus Wabenbaustoffen (7) ist, wobei zwischen den Bereichen aus Wabenbaustoffen eine Verdünnung des Bauteiles (2) bzw. ein Zwischenraum vorgesehen ist, wobei die Verdünnung bzw. der Zwischenraum sich nur über den der Längskante des gebogenen oder geknickten Bauteiles (2) benachbarten Bereich erstreckt.

2. Gepäckablage nach Anspruch 1, dadurch gekennzeichnet, daß der Kompositteil aus ausgehärteten Glasfaser- oder Carbonfaser-Prepregs (6) besteht.

3. Gepäckablage nach Anspruch 1 oder 2, dadurch gekennzeichnet, daß die Verschlußklappe (3) und der Bauteil (2) aus einem Stück gefertigt sind, wobei zwischen Bauteil (2) und Verschlußklappe (3) eine Verdünnung des Materials bzw. ein Zwischenraum zwischen Bereichen mit Wabenbaustoff (7) vorgesehen ist.

4. Gepäckablage nach Anspruch 1, dadurch gekennzeichnet, daß die Verschlußklappe (3) und der Bauteil (2) separat gefertigte Teile sind, wobei zwischen Bauteil (2) und Verschlußklappe (3) eine Scharnierverbindung vorgesehen ist.

5. Gepäckablage nach einem der Ansprüche 1 bis 4, dadurch gekennzeichnet, daß Anschlußbauteile, beispielsweise Beschläge, Aufhängteile, Auflagen, etc. mit dem Bauteil der Gepäckablage verklebt, verschraubt, vernietet oder durch Mit- bzw. Anspritzen verbunden sind.

6. Verfahren zur Herstellung von Gepäckablagen gemäß einem der Ansprüche 1 bis 5, wobei die ebenen End- (1) und allfälligen Zwischenwände aus Kunststoffmaterial gespritzt und der gebogene oder geknickte, zumindest einen Teil der Seitenwände oder Ummulde bildende Bauteil (2) separat angefertigt wird und alle Bauteile anschließend durch Verkleben, Verschrauben, Vernieten oder Verschweißen miteinander verbunden werden, dadurch gekennzeichnet, daß vorerst zur Herstellung des Bauteiles (2) ein Prepreg (6) aus zumindest zwei Lagen mit dazwischen und in einem Abstand zueinander angeordneten Bereichen von Wabenbaustoffen (7) angefertigt, auf eine Negativform (5) aufgebracht und in einem Autoklaven durch Wärmeanwendung ausgehärtet wird, und daß anschließend der ausgehärtete Bauteil (2) mit den ebenen End (1)- und allfälligen Zwischenwänden verbunden wird.

7. Verfahren zur Herstellung von Gepäckablagen gemäß einem der Ansprüche 1 bis 5, wobei die ebenen End- (1) und allfälligen Zwischenwände aus Kunststoffmaterial gespritzt werden, dadurch gekennzeichnet, daß zur Bildung des gebogenen oder geknickten, zumindest einen Teil der Seitenwände oder Ummulde bildende Bauteils (2) ein Prepreg (6) aus zumindest zwei Lagen mit dazwischen und in einem Abstand zueinander angeordneten Bereichen von Wabenbaustoffen (7) angefertigt, zusammen mit zumindest den Endwänden (1) auf eine Negativform (5) aufgebracht, in einem Autoklaven durch Wärmeanwendung ausgehärtet und somit gleichzeitig eine Verbindung der vorerst separaten Teile durch Verklebung bzw. Verschweißung hergestellt wird.

8. Verfahren nach Anspruch 6 oder 7, dadurch gekennzeichnet, daß die Aushärtung im Autoklaven zusätzlich unter erhöhtem Druck durchgeführt wird.

9. Verfahren nach Anspruch 6 oder 7, dadurch gekennzeichnet, daß vor dem Aushärten ein zusätzlicher Prepreg (10) über zumindest den den Seitenkanten (6') des Prepregs (6) benachbarten Bereich und über die Außenseite der Endwände (1) gelegt und zusammen mit den übrigen Bauteilen ausgehärtet und so eine Verbindung zwischem dem aus dem Prepreg (6) erhaltenen Bauteil (2) und den Endwänden (1) hergestellt wird.

10. Verfahren nach einem der Ansprüche 6 bis 9, dadurch gekennzeichnet, daß Anschlußteile an den End (1)- und allfälligen Zwischenwänden bei deren Herstellung mit- bzw. angespritzt und Anschlußteile an den Bauteil (2) durch Verklebung mit Hilfe eines Klebefilms eines flüssigen Klebstoffes od. dgl. während des Aushärtens mit diesen verbunden werden.

## Claims

1. Overhead luggage locker particularly for aircraft, comprising planar end walls (1) and, if appropriate, also intermediate walls of extruded parts, a curved or bent component (2) at least partly forming the side walls or receptacle and at least one hinged cover (3), characterized in that the curved or bent component (2) is a composite part produced with a sandwich structure with spaced honeycomb structural material areas (7), in which between the latter there is a thinning of the component (2) or an intermediate space, said thinning or intermediate space extending only over the area adjacent to the longitudinal edge of the bent or curved component (2).

2. Luggage locker according to claim 1, characterized in that the composite part comprises cured glass or carbon fibre prepregs (6).

3. Luggage locker according to claim 1 or 2, characterized in that the hinged cover (3) and component (2) are made in one piece and between the component (2) and cover (3) there is a thinning of the material or an intermediate space between honeycomb structural material areas (7).

4. Luggage locker according to claim 1, characterized in that the hinged cover (3) and component (2) are separately manufactured parts and a hinge connection is provided between component (2) and cover (3).

5. Luggage locker according to one of the claims 1 to 4, characterized in that connection parts, e.g. fittings, suspension parts, supports, etc. are bonded, screwed, riveted or joined by extrusion on or with the luggage locker component.

6. Method for the manufacture of luggage lockers according to one of the claims 1 to 5, in which the end walls (1) and any intermediate walls are extruded from plastics material and the bent or curved component (2) forming at least part of the side walls or receptacle is separately produced and all the components are subsequently interconnected by bonding, screwing, riveting or welding, characterized in that, firstly for the production of the component (2), a prepreg (6) is formed from at least two layers with spaced honeycomb structural material areas (7) between them, followed by application to a negative form (5) and curing in an autoclave by heat application, and that subsequently the cured component (2) is joined to the planar end walls (1) and any intermediate walls.

7. Method for the manufacture of luggage lockers according to one of the claims 1 to 5, in which the planar end walls (1) and any intermediate walls are extruded from plastics material, characterized in that for forming the bent or curved component (2) forming at least part of the side walls or receptacle, a prepreg (6) is produced from at least two layers with spaced honeycomb structural material areas (7) between the same, is applied together with at least the end walls (1) to a negative form (5), curing takes place by heat application in an autoclave and simultaneously a connection of the previously separate parts is obtained by bonding or welding.

8. Method according to claim 6 or 7, characterized in that the curing in the autoclave is additionally performed under elevated pressure.

9. Method according to claim 6 or 7, characterized in that prior to curing an additional prepreg (10) is placed at least over the area adjacent to the lateral edges (6') of the prepreg (6) and over the outside of the end walls (1) and cured together with the remaining components and in this way a connection is formed between the component (2) obtained from the prepreg (6) and the end walls (1).

10. Method according to one of the claims 6 to 9, characterized in that connection parts are extruded on or with the end walls (1) and any intermediate walls during their manufacture and connection parts are connected to the component (2) by bonding with the aid of an adhesive film of a liquid adhesive or the like during curing.

## Revendications

1. Structure suspendue de rangement pour bagages, en particulier pour avions, se composant de parois d'extrémité (1) et d'éventuelles parois intermédiaires en pièces moulées par injection, un composant (2), coudée ou courbé, formant du moins partiellement les parois latérales ou la cavité et au moins d'un capot de fermeture (3), caractérisée en ce que le composant coudé ou courbé (2) est une pièce composite fabriquée en sandwich avec des zones de matériaux en nid d'abeilles (7), à distance les unes des autres, entre les zones de matériaux en nid d'abeilles, un amincissement du composant (2) respectivement un espace intermédiaire étant prévu, l'amincissement respectivement l'espace intermédiaire s'étendant seulement sur la zone voisine du bord longitudinal du composant coudé ou courbé (2).

2. Structure pour rangement selon, la revendication 1, caractérisée en ce que la pièce composite se compose de feuilles préimprégnées durcies en fibres de verre ou en fibres de carbone.

3. Structure pour rangement selon la revendication 1 ou 2, caractérisée en ce que le capot de fermeture (3) et le composant (2) sont fabriqués d'un seul tenant, entre le composant (2) et le capot de fermeture (3) un amincissement du matériau respectivement un espace intercalaire étant prévu entre des zones avec de la matière en nid d'abeilles (7).

4. Structure pour rangement selon la revendication 1, caractérisée en ce que le capot de fermeture (3) et le composant (2) sont des pièces fabriquées séparément, entre le composant (2) et le capot de fermeture (3) étant prévue une liaison par charnière.

5. Structure pour rangement selon l'une des revendications 1 à 4, caractérisée en ce que les composants de jonction, par exemple des ferrures, des pièces d'accrochage, des appuis etc. sont collés, vissés, rivetés au composant de la structure de rangement pour bagages ou sont reliés par moulage par injection.

6. Procédé pour la fabrication de structures de rangement pour bagages selon l'une des revendications 1 à 5, les parois d'extrémité (1) et les parois intermédiaires éventuelles étant moulées par injection, et le composant coudé ou courbé (2), qui forme au moins une partie des parois latérales ou cavité, étant fabriqué séparément et tous les composants étant ensuite reliés entre eux par collage, vissage, rivetage ou soudage, caractérisé en ce que tout d'abord pour la fabrication du composant (2), une feuille préimprégnée (6) est fabriquée à partir d'au moins deux couches avec des zones de matériaux en nid d'abeilles (7) disposées entre et à distance les unes des autres, est placée sur un moule négatif (5) et est durcie en autoclave par application de chaleur et en ce qu'ensuite le composant durci (2) est relié aux parois d'extrémité planes (1) et intermédiaires éventuelles.

7. Procédé pour la fabrication de structures de rangement pour bagages selon l'une des revendications 1 à 5, les parois d'extrémité planes (1) et les parois intermédiaires éventuelles étant moulées par injection, caractérisé en ce que pour la formation du composant coudé ou courbé (2) formant au moins une partie des parois latérales ou la cavité, une feuille préimprégnée (6) est fabriquée à partir d'au moins deux couches avec des zones de matériaux en nid d'abeilles (7) disposées entre et à distance les unes des autres, est placée ensemble avec au moins les parois d'extrémité (1) sur un moule négatif (5) et est durcie en autoclave par application de chaleur et ainsi une liaison des pièces tout d'abord séparées est établie en même temps par collage respectivement par soudage.

8. Procédé selon la revendication 6 ou 7, caractérisé en ce que le durcissement est exécuté en autoclave en plus sous pression plus élevée.

9. Procédé selon la revendication 6 ou 7, caractérisé en ce qu'avant le durcissement, une feuille préimprégnée supplémentaire (10) est placée sur au moins la zone voisine des bords latéraux (6') de la feuille préimprégnée (6) et sur la face externe des parois d'extrémité (1) et est durcie ensemble avec les autres composants établissant ainsi une liaison entre le composant (2) obtenu à partir de la feuille préimprégnée (6), et les parois d'extrémité (1).

10. Procédé selon l'une des revendication 6 à 9, caractérisé en ce que des pièces de jonction sont moulées par injection aux parois d'extrémité (1) et éventuellement intermédiaires pour la fabrication et des pièces de jonction sont reliées sur le composant (2) par collage à l'aide d'une pellicule de colle d'une colle liquide ou similaire pendant le durcissement avec ces dernières.
